# EUROPEAN PATENT APPLICATION

(11) **EP 2 641 683 A1**
(43) Date of publication of application: **25.09.2013**
(21) Application number: 13160005.8
(22) Date of filing: 19.03.2013
(51) Int. Cl.: B23D 23/00

(54) **Cutting device and cutting tool insert for cutting metal studs or channels**

(30) Priority: 19.03.2012 SE 1250262
(71) Applicant: Charlez, Rune, 432 53 Varberg (SE); Charlez, Ulf, 432 41 Varberg (SE)
(72) Inventor: Charlez, Rune, 432 53 Varberg (SE); Charlez, Ulf, 432 41 Varberg (SE); Pinter, Edward, 432 95 Varberg (SE)
(74) Representative: Somlo, Tommy

(57) **Abstract**

The present invention relates to a cutting device for cutting a metal stud or metal profile beam for metal framing constructions, a cutting tool insert for cutting a metal stud or metal profile beam, and to a cutting arrangement comprising the cutting device and one, two, or a plurality of cutting tool insert adapted for a type, or different types, of stud or beam profile and dimension. The cutting device comprises a socket for receiving a cutting tool insert, and the cutting tool insert has a shape adapted to be received in the socket for securing the insert during cutting operation.

## Description

### Field of the Invention

The present invention relates to the field of cutting different types of metal studs, metal channels or metal profile beams for use in metal framing constructions, such as light steel framing constructions used for framing in e.g. commercial or residential constructions.

More specifically, the present invention relates to a cutting device for cutting a metal stud or metal profile beam for metal framing constructions, which stud or beam has a bend or curved profile. The present invention also relates to a cutting tool insert for cutting a metal stud or metal profile beam, and to a cutting arrangement comprising the cutting device and one, two, or a plurality of cutting tool inserts adapted for a type, or different types, of stud or beam profiles and dimensions.

### Background Art

A known construction technique used in commercial and residential construction is framing, or light-weight framing, which is a technique based on long narrow structural members often referred to as studs when arranged in an upright configuration and channels when arranged in a horizontal orientation. The studs and channels are connected and arranged to provide a stable framework of e.g. a wall or other building element for supporting e.g. lath, drywall, or other types of exterior or interior coverings.

The studs and channels in light frame construction may be formed of wood, metal, or steel elements which are cut into the right length depending on the intended use and framework configuration. The framework of a wall portion may for example be interrupted by open sections in order to provide openings for e.g. doors or windows, which require different stud lengths. Hence, studs or channels made from metal or steel are cut into the desired length using a cutting device.

However, due to different cross-sectional profiles of the metal members which are used to form the studs and channels, such as steel tubes having U-shaped, C-shaped, M-shaped or other types of curved profiles, cutting or adaptation of the stud length on site, for example at a construction site, is cumbersome and result in time consuming operations. Also, the use of many different types and metal stud profiles leads to cutting defections or indentations in the cross-sectional profile of cut end portion or the finished studs.

### Summary of the Invention

In view of the above-mentioned and other drawbacks of the prior art, a general object of the present invention is to provide improved devices for cutting metal studs, channels or metal profile beams for metal framing constructions, which devices allow for more efficient operation and improved cutting result.

These and other objects are independently achieved by a cutting device and cutting tool insert according to the independent claims. Preferred embodiments of the invention are presented in the dependent claims.

According to a first aspect of the invention a first inter-related product is provided in the form of a cutting device for cutting a metal stud or metal profile beam for metal framing constructions, which cutting device comprises a base member, an actuating member which is pivotally mounted to the base member at a pivot joint having a pivot axis, and a first cutting tool for cutting the metal profile, which first cutting tool is attached to the actuating member, the first cutting tool being movable for cutting action in relation to the base member by pivoting the actuator member in relation to, or towards, the base member. Furthermore, the base member comprises a socket for receiving a cutting tool insert comprising a second cutting tool for cutting action cooperation with the first cutting tool, wherein the socket is arranged to secure the cutting tool insert during cutting operation.

According to a second aspect of the invention a second inter-related product is provided in the form of a cutting tool insert for cutting a metal stud or metal profile beam for metal framing constructions, which cutting tool insert is arranged to be inserted in the socket of a cutting device, the cutting tool insert comprising an insert base, and a second cutting tool connected to the insert base, wherein the second cutting tool is arranged for cooperation with the first cutting tool of the cutting device, and wherein the cutting tool insert has a shape adapted to be received in the socket for securing the second cutting tool during cutting operation.

The invention is based on the realization by the inventors that improved and more efficient cutting of a metal stud or metal profile beam for metal framing constructions is realized by providing a cutting device which comprises a first cutting tool and a socket arranged to receive different types of cutting tool inserts for cutting cooperation with the first cutting tool. Hence, at a construction site, during the construction of e.g. a framework for a wall, the cutting device may easily be adapted to cut different types of profiles and dimension of metal studs in an efficient manner by replacing the cutting tool insert. Also, the cutting device may be used for cutting new types metal stud profiles by providing a new cutting tool insert which is compatible with the new profile design. Hence, the same cutting device comprising a first cutting tool may be used for new or future profile designs, wherein the first cutting tool is compatible with different cutting tool inserts comprising second cutting tools adapted for different types of metal stud profiles. Also, by providing a cutting device according to this aspect of the invention, the number of and weight of equipment which has to be transported to a construction site may be reduced.

The invention is also based on the realization that improved and more efficient cutting of a metal stud or metal profile beam is realized by providing a cutting tool insert comprising a second cutting tool attached to an insert base, which cutting tool insert has a shape adapted to be received in a socket for securing the second cutting tool for cutting cooperation with a first cutting tool. Thereby, more cost efficient equipment for cutting studs of different type and profile, which allows for improved and more efficient transportation and handling, is provided. For example, a cutting tool insert for a specific stud profile may be provided without manufacturing a complete cutting device. Also, the cutting tool insert allows for simplified replacement of worn out or damaged cutting tools which reduce the risk for interruptions during construction work.

According to an exemplifying embodiment of the cutting device, the socket is arranged for securing the cutting tool insert in relation to the base member in a releasable manner. Thereby, the cutting tool insert may be securely attached to the socket in the base member of the cutting device during cutting operation, and may further be easily removed in order to replace the cutting tool insert with a different cutting tool insert.

According to a further exemplifying embodiment, the socket comprises, in relation to the pivot axis, a radially inner and a radially outer support surface which are arranged for abutting the cutting tool insert. The support surfaces advantageously secures the cutting tool insert in relation to the base member in order to ensure cutting operation by preventing the cutting tool insert from being displaced or move during cutting operation. Also, the support surfaces ensures the cutting tool insert is received and positioned in the correct cutting position such that the cutting tool insert is correctly aligned for cutting cooperation with the first cutting tool.

According to a further exemplifying embodiment, the socket comprises locking means for locking and unlocking the cutting tool insert in the socket. The locking means ensures the cutting tool insert remains in the correct cutting position and that it is not displaced or removed during cutting or handling of the cutting device. Also, the locking means may be arranged to indicate that a cutting tool insert has been correctly inserted in the socket and that the cutting device is configured and ready to use for cutting operation.

According to a further exemplifying embodiment, the locking means are arranged to be operated by hand. Thereby, handling and operation of the cutting device is improved by facilitating removal or replacement of a cutting tool insert in an efficient manner. For example, the locking means may comprise a movable locking member which may be actuated by hand-force. Hand-operable locking enables efficient mounting and removal of the cutting tool insert in the socket without the use of any additional tools or mounting equipment.

According to an exemplifying embodiment of the cutting tool insert, it is arranged to be secured in a socket in a releasable manner, thereby allowing for secure attachment to the socket in the base member of the cutting device during cutting operation, as well as facilitating removal in order to replace the cutting tool insert with a different cutting tool insert.

According to a further exemplifying embodiment, the cutting tool insert comprises a first support portion and a second support portion arranged on opposing sides of the cutting tool insert, which support portions are arranged to abut corresponding support surfaces in the socket for securing the cutting tool insert and the second cutting tool during cutting operation. The support portions advantageously secures the cutting tool insert in relation to the base member by preventing the cutting tool insert from being displaced, tilt or move during cutting operation. Also, the support portions ensures the cutting tool insert is received and positioned in the correct cutting position such that the cutting tool insert is correctly aligned for cutting cooperation with the first cutting tool.

According to a further exemplifying embodiment, the second cutting tool comprises a cutting tool slit arranged to receive the first cutting tool during cutting operation, which allows for improved cutting cooperation between the first and second cutting tools and provides a cut surface with suitable properties and reduced deformation of the cut end portion of the metal stud.

According to a further exemplifying embodiment, the second cutting tool comprises a first and a second cutting plate arranged in a spaced apart parallel configuration in relation to each other, wherein the cutting tool slit is formed between the first and second cutting plates. Thereby, a first cutting tool being inserted into the second cutting tool may cooperate and form a cutting edge with the cutting plates on either side, such that a suitable cut and cut surface with reduced deformations may be provided on the respective cut end portions of a metal stud which is cut and separated into two parts.

According to a further exemplifying embodiment, the insert base is form of a first and second base plate which are arranged in a parallel configuration to each other and the second cutting tool, wherein the second cutting tool is arranged between the first and second base plates. According to a further embodiment, the cutting tool insert comprises, arranged in the following order, the first base plate; the first cutting plate; one, two, or a plurality of spacers for providing the cutting tool slit between the first and second cutting plates; the second cutting plate, and the second base plate.

According to a further exemplifying embodiment, the cutting tool insert further comprises a locking portion for locking and unlocking the cutting tool in relation to the socket. The locking portion ensures the cutting tool insert may be arranged and secured in the correct cutting position during cutting operation and that it is not displaced or accidentally removed during cutting or handling.

According to an exemplifying embodiment of the present invention, it relates to a cutting arrangement for cutting a metal stud or profile beam for metal framing constructions, which arrangement comprises a cutting device according to any one of the embodiments of the present invention and a cutting tool insert according to any one of the embodiments of the present invention. According to an exemplifying embodiment of the cutting arrangement, it further comprises a second cutting tool according to any one of the embodiments of the cutting tool insert, wherein the first cutting tool may be replaced with the second tool insert depending on profile type or mode of cutting operation, or vice versa. For example, the second cutting tool insert may be arranged for cutting metal beams and/or studs having a different cross-sectional profile.

According to a further embodiment of the cutting arrangement, the locking means of the socket are arranged to cooperate with the locking portion of the cutting tool insert for locking and unlocking the cutting tool insert in relation to the socket.

According to another aspect of the present invention, it relates to the use of a cutting tool insert according to any of the embodiments of the present invention for cutting a metal stud or metal profile beam for metal framing constructions.

Generally, other objectives, features, and advantages of the present invention will appear from the following detailed disclosure, from the attached dependent claims as well as from the drawings are equally possible within the scope of the invention.

### Brief Description of Drawings

Embodiments of the invention will now be described, by way of example, with reference to the accompanying drawings, wherein:
Fig. 1 is a schematic perspective view of an embodiment of the cutting device according to the present invention, seen from a first angle.
Fig. 2 is a schematic perspective view of the embodiment of the cutting device in Fig. 1 seen from a different angle.
Fig. 3 is a partial schematic perspective zoomed-in view of the embodiment of the cutting device in Fig. 1, seen from a first angle.
Fig. 4 is a partial schematic perspective zoomed-in view of the embodiment of the cutting device in Fig. 1, seen from a different angle.
Fig. 5 is a schematic perspective view of an embodiment of the cutting tool insert according to the present invention.
Fig. 6 is a schematic side view of the cutting tool insert in Fig. 5, and a metal stud or channel profile arranged to be received in the cutting tool insert.
Fig. 7 is a schematic bottom view of the cutting tool insert in Fig. 5.
Fig. 8 is a schematic side view of a further embodiment of the cutting tool insert according to the present invention, and a metal stud or channel profile arranged to be received in the cutting tool insert.
Fig. 9 is a schematic side view of a further embodiment of the cutting tool insert according to the present invention.
Fig. 10 is a schematic side view of an embodiment of a cutting arrangement comprising the cutting device and the cutting tool insert according to the present invention.
Fig. 11 is a schematic side view of the embodiment of the cutting arrangement in Fig. 10, wherein the cutting tool insert is arranged in the socket of the cutting device.

It should be understood that the drawings are not true to scale and, as is readily appreciated by a person skilled in the art, dimensions other than those illustrated in the drawings are equally possible within the scope of the invention.

### Detailed Description of Embodiments of the Invention

In the drawings, similar, or equal elements are referred to by equal reference numerals.

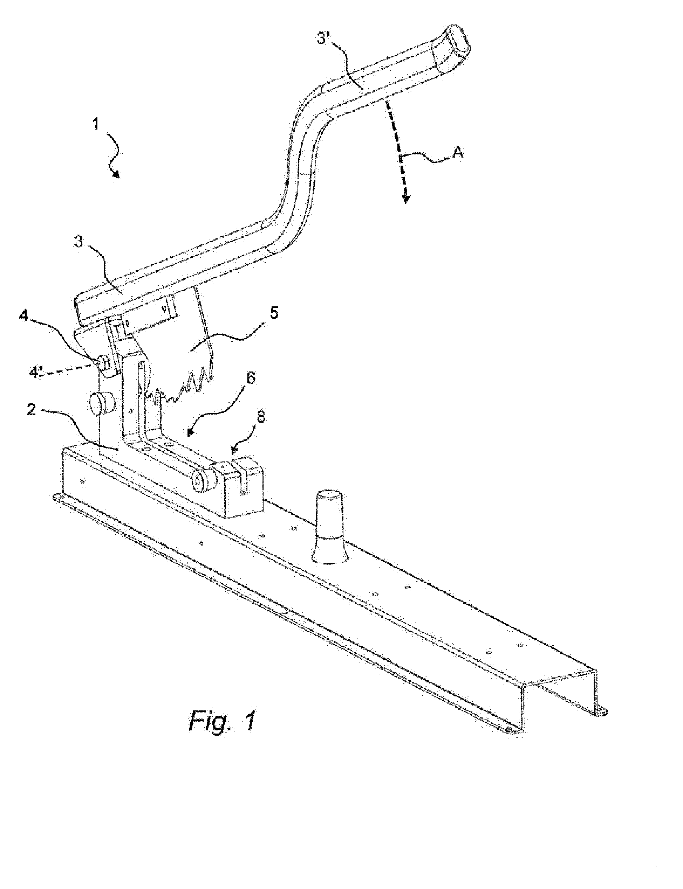

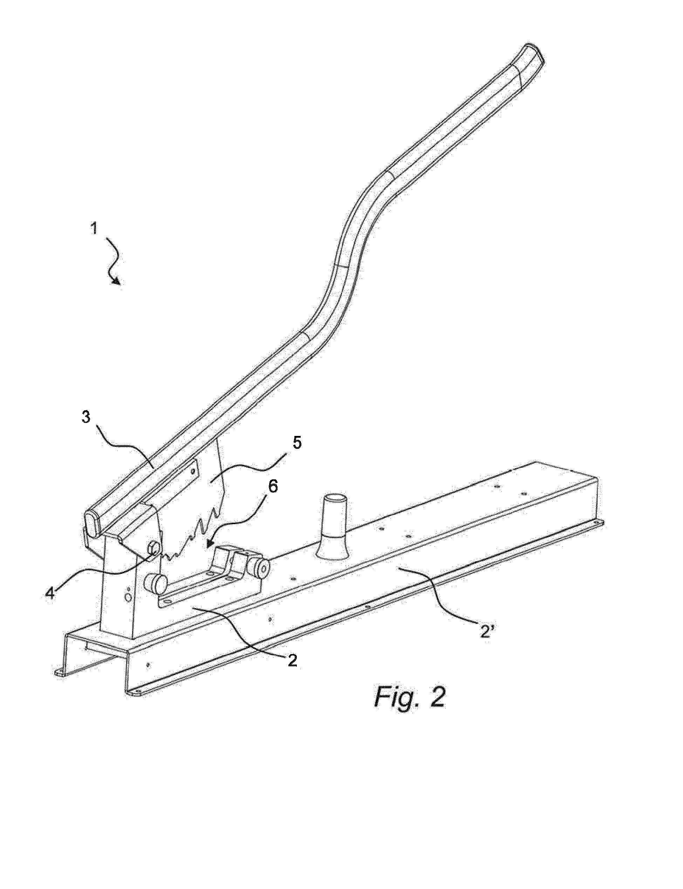

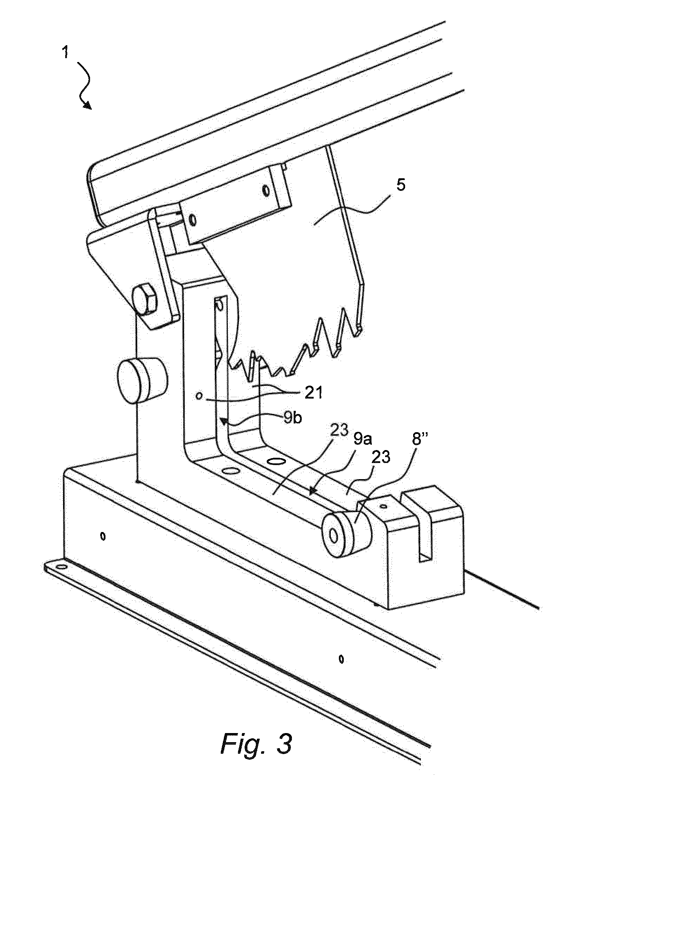

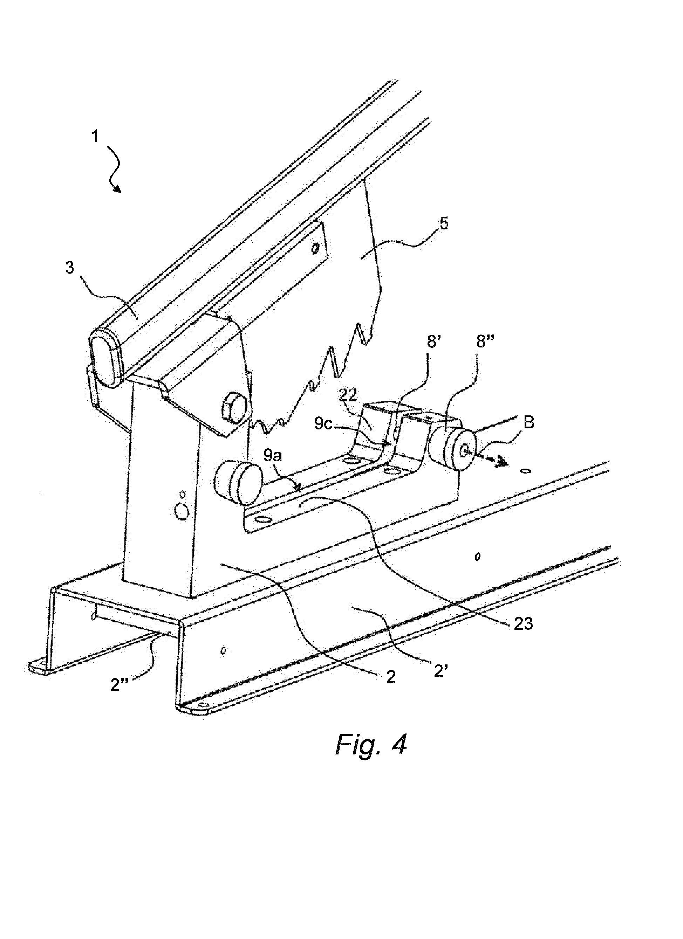

In Fig. 1-4, an exemplifying embodiment of a cutting device 1 for cutting a metal stud or metal profile beam for metal framing constructions is shown. The cutting device comprises a base member 2 attached to base support 2' forming a stand for supporting the cutting device during operation. An actuating member 3 comprising a handle portion 3' is pivotally mounted to the base member 2 at a pivot joint 4 having a pivot axis 4'. The cutting device 1 further comprises a first cutting tool 5 formed of a blade having a saw-tooth cutting edge for cutting the metal stud, which first cutting tool 5 is attached to the actuating member. The first cutting tool 5 is movable for cutting action in relation to the base member 2 by pivoting the actuator member 3 in relation to the base member 2, as indicated by arrow A. The actuator member 3 has a longitudinal shape and extends in the radial direction in relation to pivot axis 4', thereby forming a lever device for the first cutting tool 5 which is attached to a radial inner portion of the actuator member 3. The handle portion 3' is formed at a radial outer portion of the actuator member 3.

As illustrated, the base member 3 of the cutting device 1 further comprises a socket 6 for receiving a cutting tool insert comprising a second cutting tool for cutting action cooperation with the first cutting tool 5, wherein the socket is arranged to secure the cutting tool insert during cutting operation. In other words, according to the exemplified embodiment, the socket 6 forms an opening or cavity into which a cutting tool insert is designed to fit in a releasable manner. The socket 6 has no axial sides, but is not limited to this configuration. Partial axial and/or radially inner and outer sides may be arranged to form part of the socket 6 which also has at least one insert opening for receiving the cutting tool insert. As illustrated, the insert opening is facing the actuator member 3. However, the insert opening may also be arranged such that it is facing, at least partially, in the axial and/or radial direction, in relation to the pivot axis 4'. Furthermore, the socket 6 is not limited to form an opening or cavity. It may also be formed of socket members, such as protruding portions from the base member 2 and/or groves arranged in the base member 2, which socket members are arranged to secure a cutting tool insert.

The socket 6 of the illustrated embodiment in Fig. 1-4 further comprises, in relation to the pivot axis 4', a radially inner and a radially outer support surface 21 and 22, and a bottom support surface 23, which support surfaces form part of the socket 6 and which are arranged to abut the cutting tool insert when being mounted in the socket 6. In more detail, each support surfaces 21, 22, 23 is designed for maintaining the cutting tool insert in a cutting position during cutting operation. The first and second support surfaces 21 and 22 are arranged in a opposite configuration in relation to each other, essentially facing each other, and each extending from the bottom surface 23 towards the actuator member 3 and/or the first cutting tool 5, wherein the insert opening of the socket 6 is formed between the portions of the first and second surfaces 21 and 22 closest the actuator member 3. Thereby the socket 6 comprises a partially enclosed space to accommodate the cutting tool insert, wherein the space is defined by the first, second and bottom support surfaces 21, 21 and 23.

As further shown, the base member 2 is provided with a slot 9a extending perpendicular to the pivot axis 4'. The slot 9a is arranged in, or adjacent, the socket 6 for cooperation with the cutting tool insert, and is facing the first cutting tool 5. Furthermore, the slot 9a is axially aligned with a cutting edge of the first cutting tool 5, and is arranged to receive cut-off portions of material from the metal stud or metal profile beam during cutting operation. In more detail, a portion of a metal stud which is cut off during cutting cooperation between the first cutting tool and a second cutting tool of a cutting tool insert is arranged to be received in the slot 9a and to be guided into the slot 9a by the cutting tool insert.

According to an embodiment, the 9a slot forms a through hole through the base member 2 and through the base support 2' for removal of cut-off portions of material from the metal stud or metal profile beam, for example, into a collecting compartment 2" arranged below the base member 2. As further shown, the slot 9a extends between the first and second support surfaces 21 and 23, across the bottom support surface 23.

The base member 2 further comprises a radially inner and a radially outer slot 9b and 9c, which are connected with and form part of slot 9a. However, each or any of slot 9a, 9b and 9c may also be arranged as a separate slot. The radially inner slot 9b is formed in the radially inner support surface 21 and is arranged to receive a radially inner locking portion of the cutting tool insert in order to secure and align the cutting tool insert in the correct cutting position when mounted in the socket 6. The radially outer slot 9c is formed in the radially outer support surface 22 and is arranged to receive a radially outer locking portion of the cutting tool insert in order to secure and align the cutting tool insert in the correct cutting position when mounted in the socket 6.

The cutting device 1 further comprises locking means 8 for locking and unlocking the cutting tool insert to the socket 6. The looking means 8 comprises a locking member 8' which arranged to move between and open and locked position, wherein, in the closed position, a cutting tool insert which is mounted in the socket 6 is securely attached. In the illustrated embodiment, in the locked position, the locking member 8' extends axially into the base member 2 and across the slot 9c for locking cooperation with a locking portion of a cutting tool insert which extends into the slot 9c. The locking member 8' is arranged to be actuated between an open and closed positions by being moved axially be means of a locking member actuator 8" being operable by hand. Thereby, fast and reliable single-movement-operation of the locking means is provided, wherein the user of the cutting device only has to perform a single hand movement in order to unlock the locking device such that the cutting tool insert may be removed or replaced. Thereby, efficient, reliable and fast replacement of the cutting tool insert is allowed when metal studs having different types of curved profiles are to be cut.

According to an exemplifying embodiment, the locking member 8' is arranged to secure the cutting tool insert by means of snap-fit action, or by spring-loaded action. For example, the locking means 8 may comprise a spring device which is preloaded and/or configured to return the locking member 8' to its locked position. The locking means 8 may also, or alternatively, comprise a resilient member comprising a portion arranged to be displaced during insertion of and by the cutting tool insert, and thereafter automatically self-relocated into a locking position when the cutting tool insert is fully inserted in the socket.

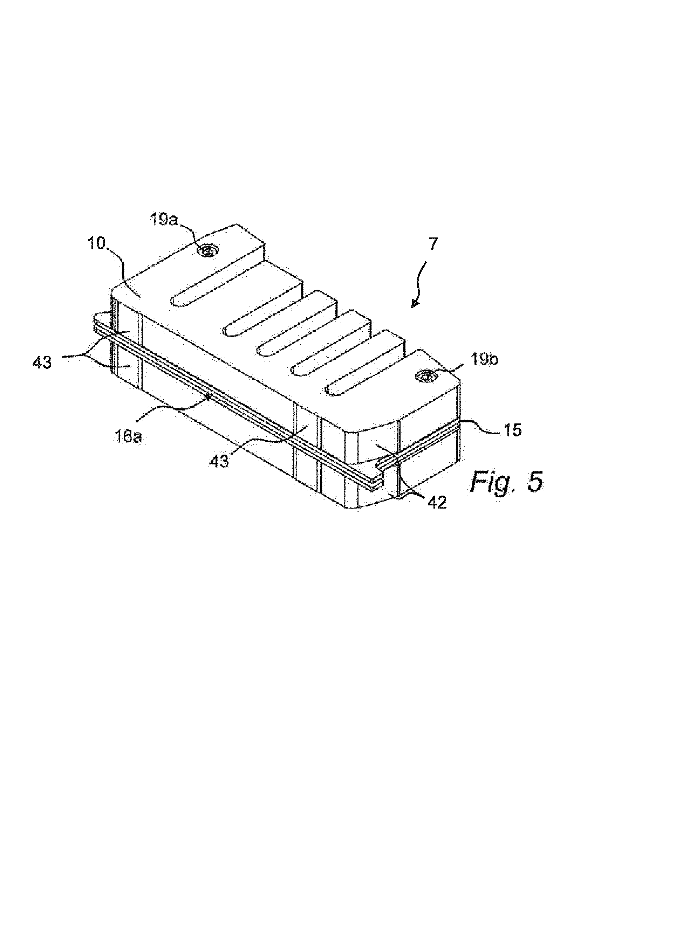

In Figs. 5-7, an exemplifying embodiment of a cutting tool insert 7 for cutting a metal stud or metal profile beam for metal framing constructions is shown. The cutting tool insert 7 is adapted to be used in combination with a cutting device, such as cutting device 1 described above with reference to Figs. 1-4, and is arranged to be inserted in a socket of such a cutting device. As illustrated, the cutting tool insert comprises an insert base 10, and a second cutting tool 15 connected to the insert base 10, which second cutting tool is adapted for cutting metal studs having a specific cross-sectional profile configuration. The cutting tool insert 7 further comprises a first and a second support portion 41 and 42 which are arranged on opposing sides of the cutting tool insert. A bottom support surface 43 is arranged on the opposite side of a cutting edge 15' of the second cutting tool 15. As shown, the second cutting tool 15 is formed of a first and a second cutting plate 15a and 15b which are arranged in a spaced apart parallel configuration in relation to each other by means of spacers 17a and 17b. The base insert comprises a first and a second base plate 10a and 10b also arranged in a parallel configuration in relation to each other and in relation to the cutting plates 15a and 15b. The cutting plate 15a, 15b and base plates 10a, 10b are attached to by means of attachment devices 19a and 19b, such as screws, extending through the plates and spacers. A cutting tool slit 16 is formed between the first and second cutting plates. The cutting tool slit 16 extends through the cutting tool insert between the cutting edge 15' of the cutting tool 15 and the bottom support surface 43, such that material which is cut off from the metal stud during cutting operation and forced into the cutting tool slit 16, when the blade-shaped first cutting tool 5 of the cutting device enters into the cutting tool slit 16, may be guided out of the cutting tool insert via an output 16a of the cutting tool slit 16. In other words, the cutting tool slit 16 forms a channel extending at least partially inside the cutting tool insert for removal of cut-off material from the metal stud during cutting operation.

As illustrated, the cutting tool insert comprises locking portions 18a, 18b, 18c, which are arranged to secure and maintain the cutting tool insert in a correct mounted position in a socket. The locking portions extend outside the base plates 10a and 10b, and are formed of portions of the first and second cutting plates 15a and 15b which are arranged between the base plates 10a and 10b. The first locking portion 18a extends past and beyond respective support surfaces 42 of the base plates 10a and 10b, and is arranged to cooperate with locking means. For this purpose, the locking portion 18a comprises a support portion 18a' arranged for abutting a locking member. The second and a third locking portion 18b and 18c extend in a similar manner past and beyond support surface 43 on an opposite side of the cutting tool insert in relation to the first locking portion 18a. The locking portions are arranged and/or aligned with each other and the cutting tool slit, such that the cutting tool insert, the cutting tool slit, and locking portions may be inserted and aligned with a socket comprising corresponding slots, such as slot 9a, 9b, or 9c described with reference to Figs. 1-4.

As further shown, the cutting tool insert is arranged for cutting metal studs and beams having a certain type of profile shape. Therefore, the cutting tool insert is provided with a cutting edge 15' having a profile shape adapted to follow a specific profile. Groves 46 are provided for receiving bent profile portions of a metal stud such that the bent profile portions may be inserted into groves 46 for cutting. Corresponding groves 46 are provided in the cutting tool 15 and in the base insert 10, wherein the groves 46 extend through the cutting tool insert. As further shown, stabilizing portions 45 of the base insert 10 are provided which extend towards the cutting edge 15' of the cutting tool 15 in order to support and stabilize the cutting edge of the cutting tool 15 during operation. Furthermore, end surfaces 47 of the stabilizing portions closest to the cutting edge 15' are arranged to support the metal stud during cutting operation.

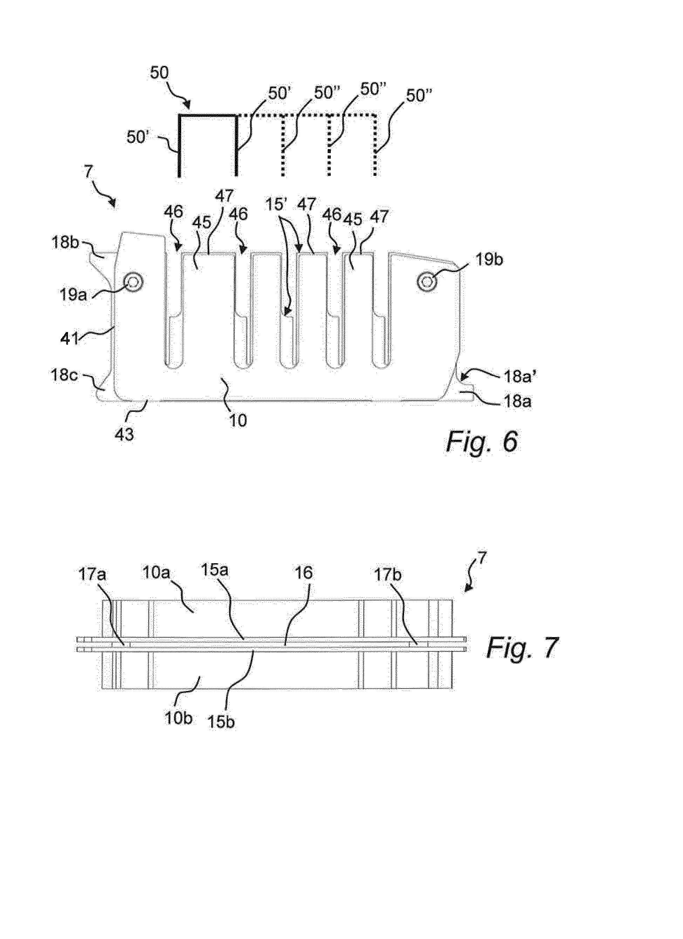

Fig. 6 also illustrates a schematic profile of a metal stud, or channel, 50 arranged to be received in the cutting tool insert 7. The stud 50 comprises bent profile portions 50' arranged to be received in corresponding groves 46. The cutting tool insert is further arranged to receive studs having different dimension, as indicated by the by dotted lines 50".

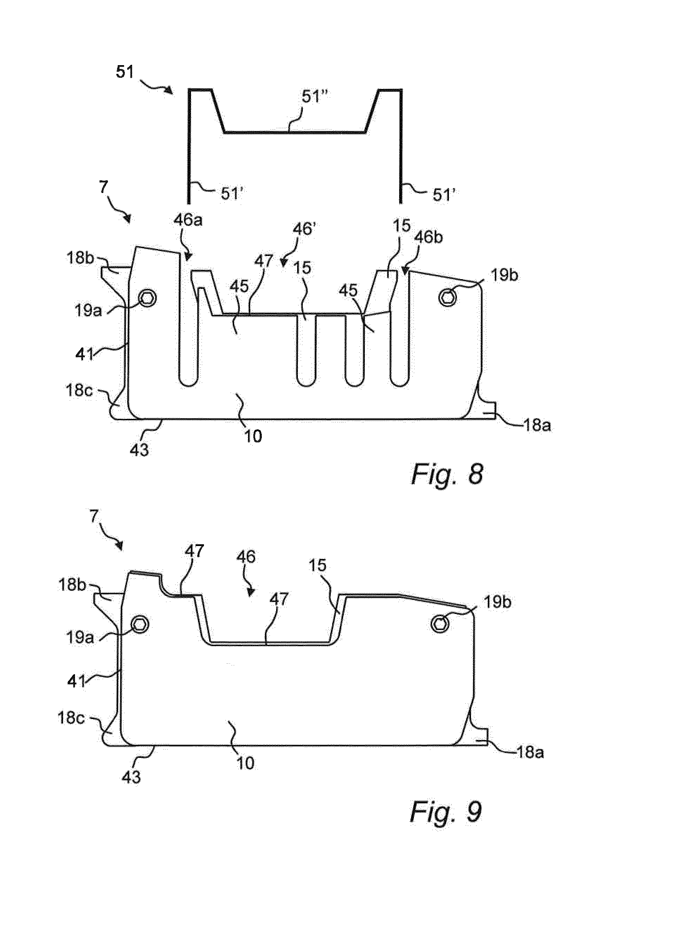

In Figs. 8-9, exemplifying embodiments of the cutting tool insert 7, are shown. The cutting tool inserts 7 are arranged in a similar manner as the cutting tool insert described with reference to Fig. 5-7, unless stated or illustrated differently.

With reference to Fig. 8, the cutting tool insert 7 is arranged for cutting metal studs and beams having a different type of profile shape. The cutting insert 7 comprises a first and second end grove 46a and 46b formed in the base insert 10 and in the cutting tool 15. A middle grove 46' is formed in the cutting tool between the end groves 46a and 46b. Fig. 8 also illustrates a schematic profile of a metal stud, or channel, 51 arranged to be received in the cutting tool insert 7. The stud 51 comprises bent profile portions, or flanges, 51' arranged to be received in corresponding end groves 46a and 46b, and a lowered middle portion 51" arranged to be received in the middle grove 46'.

With reference to Fig. 9, the cutting tool insert 7 is arranged for cutting metal studs and beams having yet a different type of profile shape. The cutting profile comprises a main grove 46 formed in the cutting tool 15 and in the base insert 10 as, and of an end surface 47.

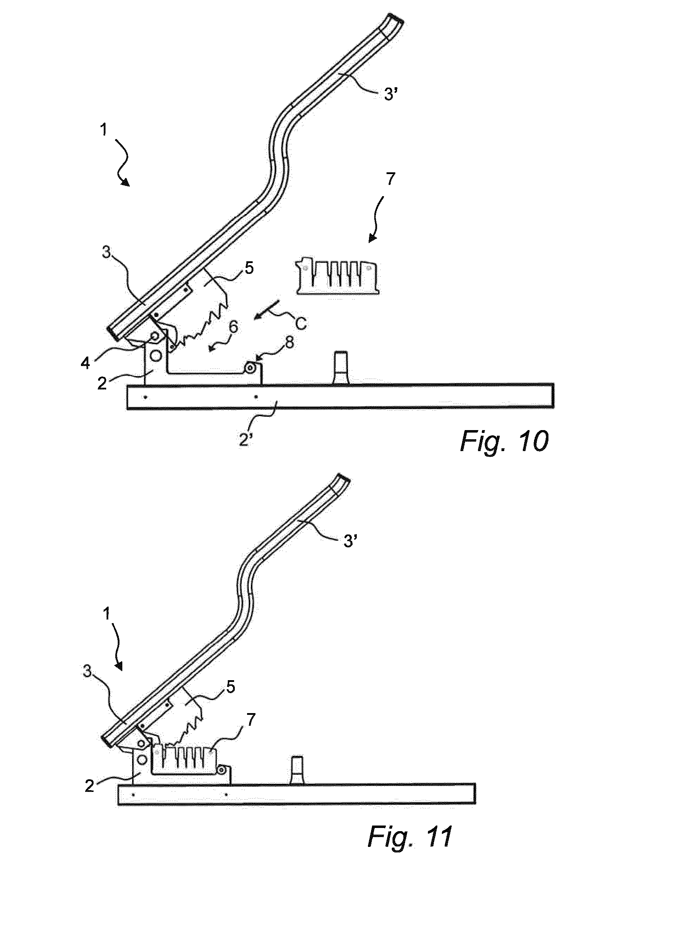

In Figs. 10-11, a cutting arrangement for cutting a metal stud or profile beam for metal framing constructions, is shown, which arrangement comprises a cutting device 1 as described above with reference to Figs. 1-4 and a cutting tool insert 7 as described above with reference to Fig. 5-6. As indicated by arrow C in Fig. 10, the cutting tool insert 7 is arranged to be inserted into the socket 6. With reference to Fig. 11, the cutting tool insert is position in the correct cutting position in which the first and second cutting tools 5 and 15 are axially aligned such that the first cutting tool 5 may received and inserted into the second cutting tool 15 during cutting operation. This is ensured by the locking portions 18a, 18b, and 18c of the cutting tool insert 7 which are received in and extend into the corresponding slots 9b and 9c. Furthermore, output 16a of the cutting tool slit 16 is aligned on top of slot 9a such that cut-off material may be transported out of the cutting tool insert and into slot 9a.

For example, during operation, a metal stud to be cut having e.g. a U-shape profile is places in an essential parallel orientation in relation to pivot axis 4' between the first and second cutting tools 5 and 15, wherein extending bent profile portions of the stud are inserted into the groves 46. Thereafter, cutting is performed by pivoting the actuator 3.

The cutting tools 5 and 15 may be formed by suitable cutting tool material, such as steel, which further may have been processed or hardened for increased strength. For example, the cutting tools 5 and 15 are formed of cutting plates having a thickness between 1 and 10 mm, or between 2 and 8, which cutting plates are cut, for example by laser techniques, to form suitable cutting edge profile.

The base member 2 and the base insert 10 may be formed of aluminum. Each base plate 10a and 10b of the base insert 10 may be formed a plate having a thickness between 0,5 and 12 cm, or between 1 and 8 cm.

It should be noted that the invention has mainly been described above with reference to a few embodiments. However, as is readily appreciated by a person skilled in the art, other embodiments than the ones disclosed above are equally possible within the scope of the invention, as defined by the appended patent claims. Also, in the application, the term stud is considered to include also the term channel, such as a metal channel for use in a wall framing constructions.

It is further noted that, in the claims, the word "comprising" does not exclude other elements or steps, and the indefinite article "a" or "an" does not exclude a plurality. A single apparatus or other unit may fulfill the functions of several items recited in the claims. The mere fact that certain features are recited in mutually different dependent claims or sections does not indicate that a combination of these features cannot be used to an advantage.

## Claims

1. A cutting device (1) for cutting a metal stud, channel or metal profile beam for metal framing constructions, the cutting device comprising:
a base member (2),
an actuating member (3) which is pivotally mounted to the base member at a pivot joint (4) having a pivot axis (4'), and
a first cutting tool (5) for cutting the metal profile, which first cutting tool is attached to the actuating member,
the first cutting tool being movable for cutting action in relation to the base member by pivoting the actuator member in relation to the base member,
wherein the base member further comprises a socket (6) for receiving a cutting tool insert (7) comprising a second cutting tool for cutting action cooperation with the first cutting tool, wherein the socket is arranged to secure the cutting tool insert during cutting operation.

2. The cutting device (1) according to claim 1,
wherein the socket (6) is arranged for securing the cutting tool insert (7) in relation to the base member (2) in a releasable manner.

3. The cutting device (1) according to any one of the preceding claims,
wherein the socket comprises, in relation to the pivot axis (4'), a radially inner (21) and radially outer (22) support surface which are arranged to abut the cutting tool insert.

4. The cutting device (1) according to any one of the preceding claims, wherein the base member (2) is provided with a slot (9a; 9b; 9c) extending perpendicular to the pivot axis (4').

5. The cutting device (1) according to any one of the preceding claims,
wherein the socket comprises locking means (8) for locking and unlocking the cutting tool insert (7) in the socket (6).

6. The cutting device (1) according to claim 5, wherein the locking means (8) are arranged to be operated by hand.

7. A cutting tool insert (7) for cutting a metal stud, channel or metal profile beam for metal framing constructions, which cutting tool insert is arranged to be inserted in the socket of a cutting device (1) according to any one of claims 1-6, the cutting tool insert comprising
an insert base (10), and
a second cutting tool (15) connected to the insert base (10),
wherein the second cutting tool (15) is arranged for cooperation with the first cutting tool (5) of the cutting device (1), and
wherein the cutting tool insert (7) has a shape adapted to be received in the socket for securing the second cutting tool (15) during cutting operation.

8. The cutting tool insert (7) according to claim 7, being arranged to be secured in a socket in a releasable manner.

9. The cutting tool insert (7) according to any one of claims 7-8, further comprising a first support portion (41) and a second support portion (42) arranged on opposing sides of the cutting tool insert, which support portions are arranged to abut corresponding support surfaces in the socket for securing the cutting tool insert and the second cutting tool (15) during cutting operation.

10. The cutting tool insert (7) according to any one of the claims 7-9, wherein the second cutting tool (15) comprises a cutting tool slit (16) arranged to receive the first cutting tool (5) during cutting operation.

11. The cutting tool insert (7) according to claim 10, wherein the second cutting tool (15) comprises a first (15a) and a second (15b) cutting plate arranged in a spaced apart parallel configuration in relation to each other, wherein the cutting tool slit (16) is formed between the first and second cutting plates (15a, 15b).

12. The cutting tool insert (7) according to any one of claims 7-11, further comprising a locking portion (18a; 18b; 18c) for locking and unlocking the cutting tool in relation to the socket.

13. Use of a cutting tool insert (7) according to any one of claim 7-12 for cutting a metal stud or metal profile beam for metal framing constructions.

14. A cutting arrangement for cutting a metal stud, channel or profile beam for metal framing constructions comprising:
a cutting device (1) according to any one of claims 1-6, and
a cutting tool insert (7) according to any one of claims 7-12.

15. A cutting arrangement according to claim 14, when the cutting device is according to any one of claims 5-6, and the cutting tool insert (7) is according to claim 12,
wherein the locking means (8) of the socket (6) are arranged to cooperate with the locking portion (18a; 18b; 18c) of the cutting tool insert (7) for locking and unlocking the cutting tool insert (7) in relation to the socket (6).
